# EUROPEAN PATENT APPLICATION

(11) **EP 3 909 480 A1**
(43) Date of publication of application: **17.11.2021**
(21) Application number: 21020255.2
(22) Date of filing: 12.05.2021
(51) Int. Cl.: A47J 37/06, F24C 15/20, A47J 37/07, A47J 36/38

(54) **COOKING DEVICE WHICH ALLOWS THE ADSORPTION OF VAPOURS, ODOURS AND LIQUIDS FROM INSIDE THE DEVICE**

(30) Priority: 15.05.2020 IT 202000011308
(71) Applicant: Angius Umberto, 09134 Cagliari (CA) (IT)
(72) Inventor: Angius Umberto, 09134 Cagliari (CA) (IT)

(57) **Abstract**

Cooking device able to adsorb, filter, deodorize, purify vapors and cooking liquids from the inside by means of heat-resistant refillable cartridges (10), completely compostable, including a permeable casing (19) containing a microporous material (20).

The device includes: metal mountable panels that can be opened on one side (3), (4), (5), (12), perforated, boxed, equipped with a sheet metal insert (2) that acts as a valve for the vapors and ducts that convey the cooking condensates to the baking pan (9) placed in the lower panel (12); a removable steel grill (11); refillable adsorbent cartridges (10); a front door (23) in tempered glass (1).

The device is producible with materials and components commonly available on the market.

## Description

The present device relates to a tool for cooking characterized by the ability to adsorb autonomously from its interior vapors, odors and liquids of the cooking of foods.

Countless containers for cooking food are known (pots, pans, and ovens). These devices disperse vapors, fumes, odors and cooking liquids in various ways and to varying degrees. This can be a problem.

Traditionally, action is taken from the outside, through natural or forced ventilation, with the inconvenience and impact that this entails (draughts, noise and so on). Even if the air is filtered using extractor hoods, a more or less significant proportion of undesirable odors and vapors are released into the environment.

Containers without lids are completely ineffective. Lidded containers, even if closed during the cooking cycle, only partially limit the problem of vapor and odor diffusion. Pots and pans that can be closed tightly (pressure cookers) are more efficient, but they create a 'boiled effect' and are unusable for grilling and roasting.

The device has marginal affinities with some roasting oven, which do not however, have special capabilities such as absorbing odors, vapors, fumes and liquids of Cooking from the inside and of maintaining a uniform temperature. Due to its characteristics and capacities, the device under consideration cannot be assimilated to an ordinary oven and is not comparable to other known and commercially available cooking containers.

The device is illustrated through the attached six Figures in a preferred but not exclusive form, by way of non-limiting example.
Fig. 1 shows an exploded view of its components.
Fig. 2, at letter A, shows a perspective view of the assembled device, with the front door, the right side panel, the top panel and other elements highlighted.
   A perspective view of the assembled device is shown at letter B, highlighting the side panel of the previous drawing, the rear panel, the upper panel and other elements.
Fig. 3, letter C shows the front elevation of the door with the tempered glass. At letter D there are two perspective views of the same door, inside and outside, with various details.
In Fig. 4, letter E shows the left side panel seen from the front.
   Letter F shows the top from above panel viewed.
In Fig. 5, at letter G is represented a perspective view of the lower panel with various elements in evidence. At letter H is represented the open left side panel with its various elements highlighted.
In Fig. 6, at letter I shows a typical panel with the external open perforated plate and several elements in evidence. At letter L, the perspective view of an adsorbing fiber (e.g. Kenaf) and the inner component made of natural Zeolite (preferably clinoptilolite) highlighted.

The outer casing of the adsorbent cartridge can be opened and closed by folding to allow the contents to be changed.

In the proposed version, the device comprises five metal boxed perforated panels, which can be assembled and opened on one side to insert the appropriate adsorbent cartridges; a door with tempered glass that can be assembled to the lower panel; a liquid collection tray with an adsorbent cartridge, located under the lower panel; a grid to place the food to be cooked on.

Natural air circulation is regulated by means of perforated sheet metal, which act as a valve overlapping the mirrored perforated sheet metal of the panels.

Odors, vapors and the accumulation of oily condensation on surfaces are particularly noticeable in kitchens or kitchenettes with limited space. The device eliminates or significantly reduces their propagation and effects, while offering considerable versatility and additional benefits:
Facilitates the cleaning of ovens, barbecues and other devices with which used, thus saving on polluting detergents;
in busy outdoor areas (courtyards, balconies, terraces) and even more so in enclosed spaces, it prevents the spread of cooking odors and vapors that are not always tolerable; in natural settings (parks or the countryside), it avoids attracting insects and animals;
is not necessary to turn grills and roasts frequently in order to achieve healthy and optimal cooking;

In the version shown in the drawings it works with ovens, cookers, barbecues and other appropriate heat sources, but it can be supplied with its own gas or electrically powered heat source, with a fan, with an internal light and/or with other complementary elements already known from the state of the art, which can optimize its performance.

The use of conventional devices can result in marginal food burns that are notoriously unhealthy (burnt fat and food are toxic).

The heat accumulated by the zeolite in the cartridges enables a constant operating temperature to be maintained. This allows for uniform cooking and prevents heat peaks (over 220°C) in grilling or barbecuing, which can be a source of carcinogenic substances (e.g. acrolein, tryptophan, heterocyclic amines and others).

The adsorbent cartridges are an integral and inseparable part of the device. The outer shell made of natural fireproof fiber (e.g. kenaf) is compostable. The natural zeolite interior (preferably clinoptillolite) is a well-known soil conditioner used in agriculture (but another equivalent environmentally friendly microporous material you could use).

Spent zeolite cartridges disposed of in the collection of domestic organic waste improve compost quality.

The device from commercially available elements and materials such as steel, aluminum is producible, glass, compostable fire retardant natural fibers, natural zeolites and others. It is economically and functionally competitive. Simplicity of manufacture and management ensure maximum safety and reliability of operation.

Materials, assembly, dimensions, number of components, accessory equipment may be added and/or varied, without affecting the originality and basic properties of the device. The dimensions of the cartridges are adapted with the device panels.

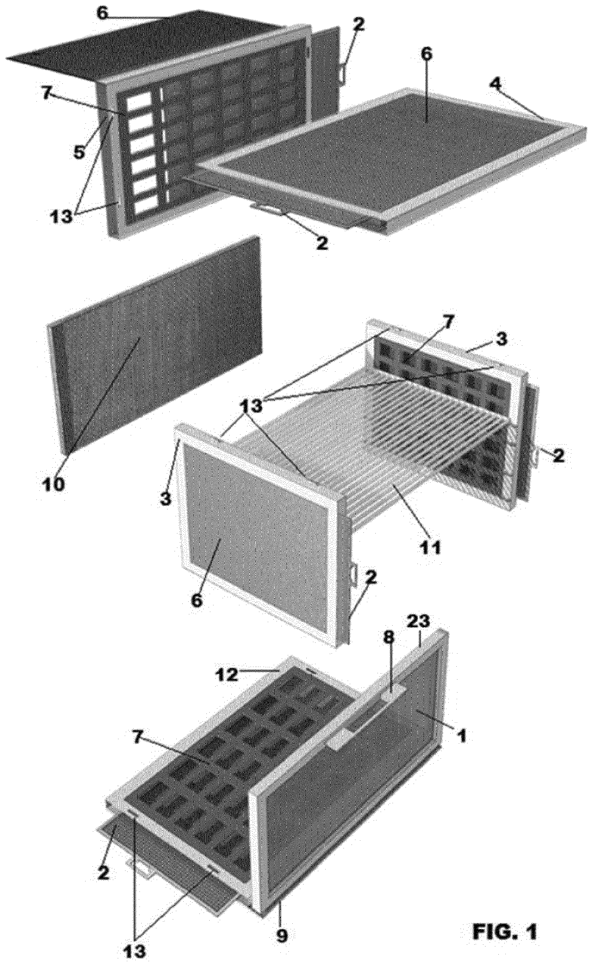

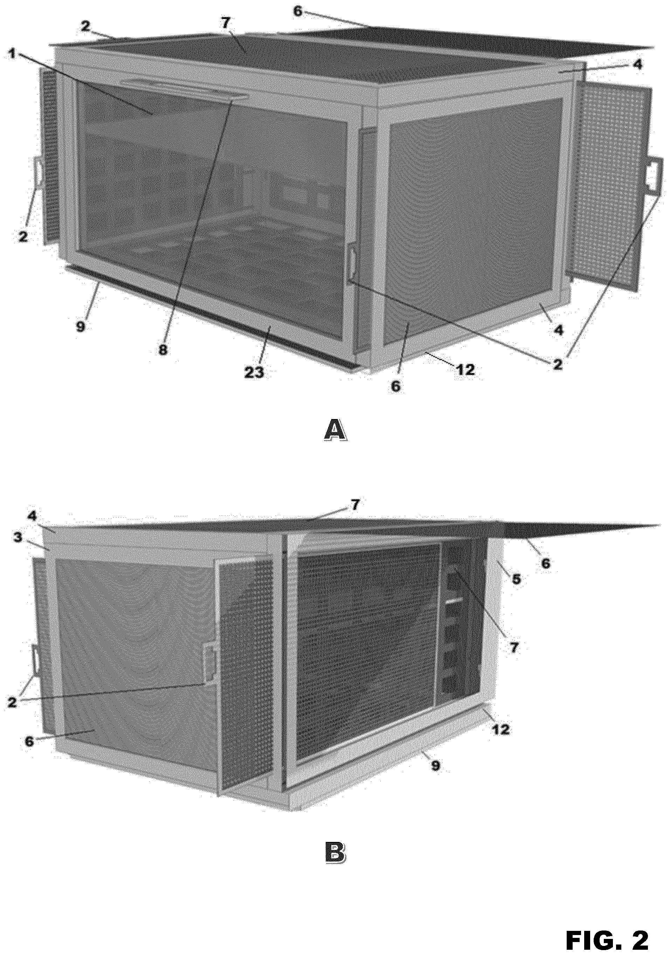

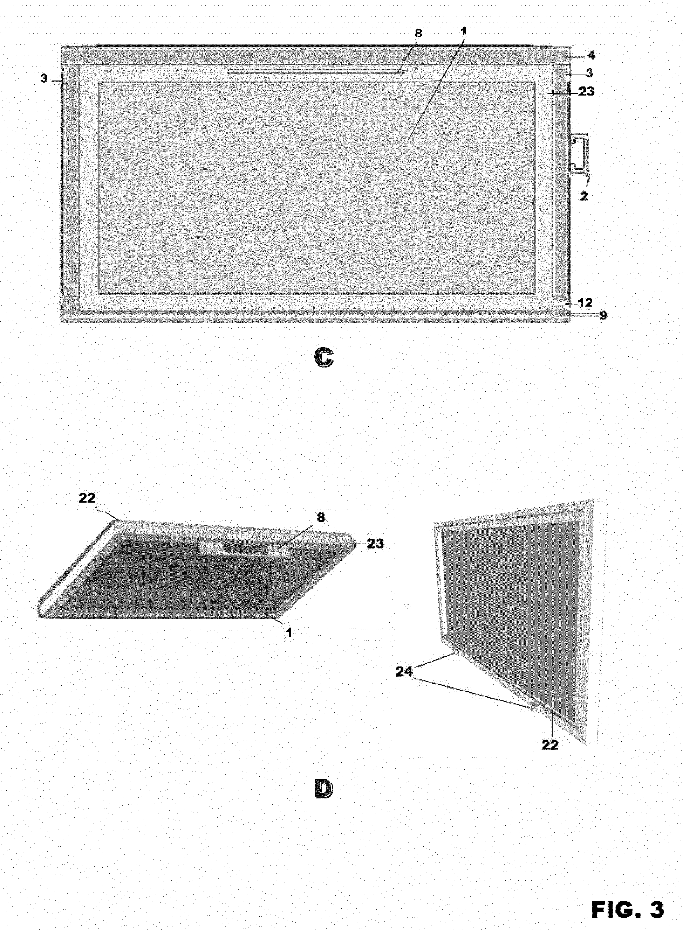

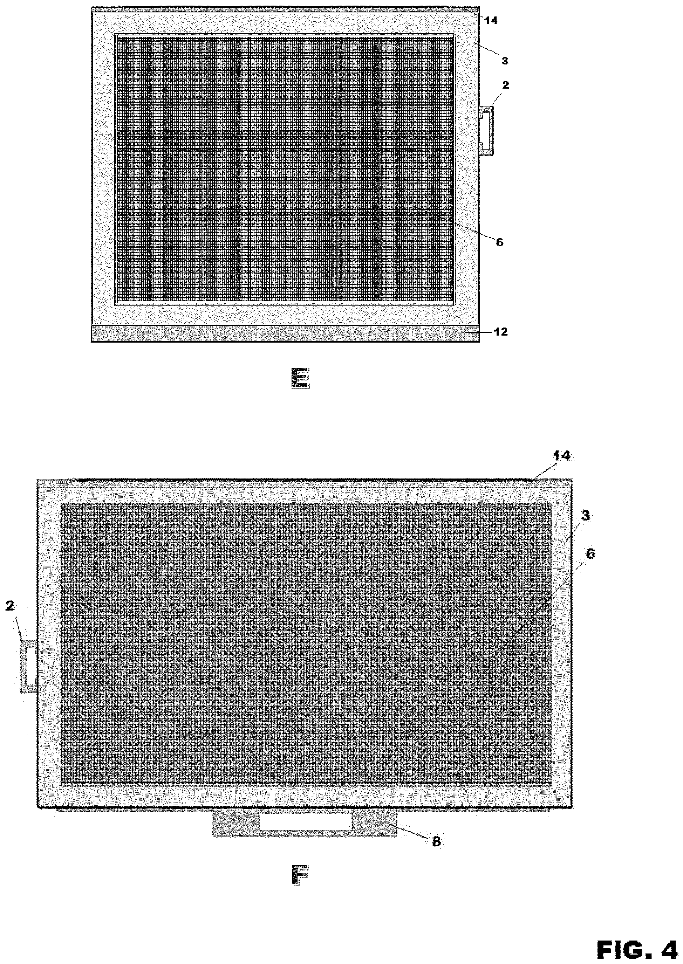

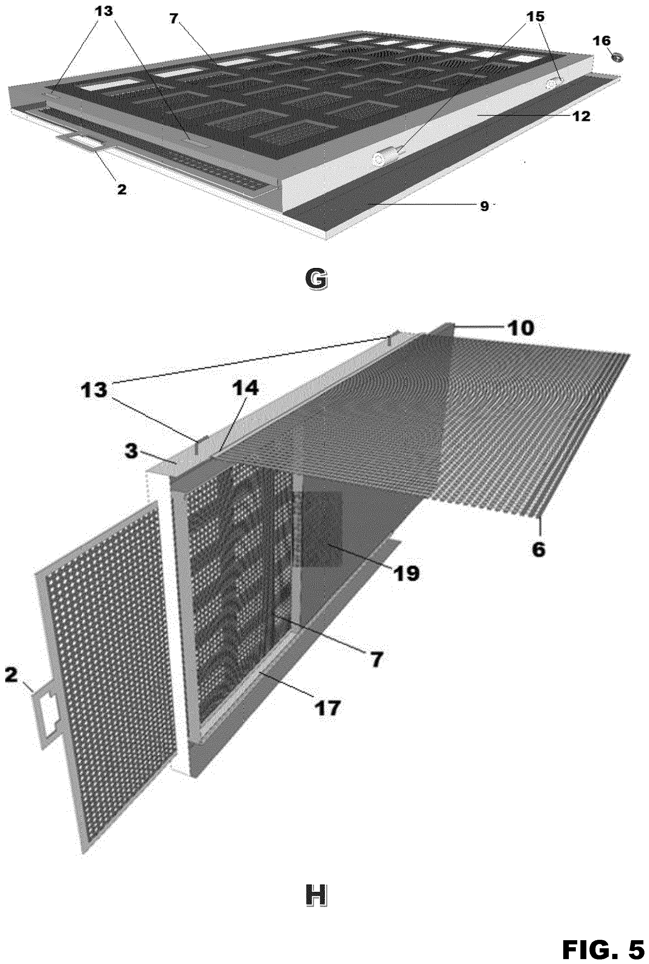

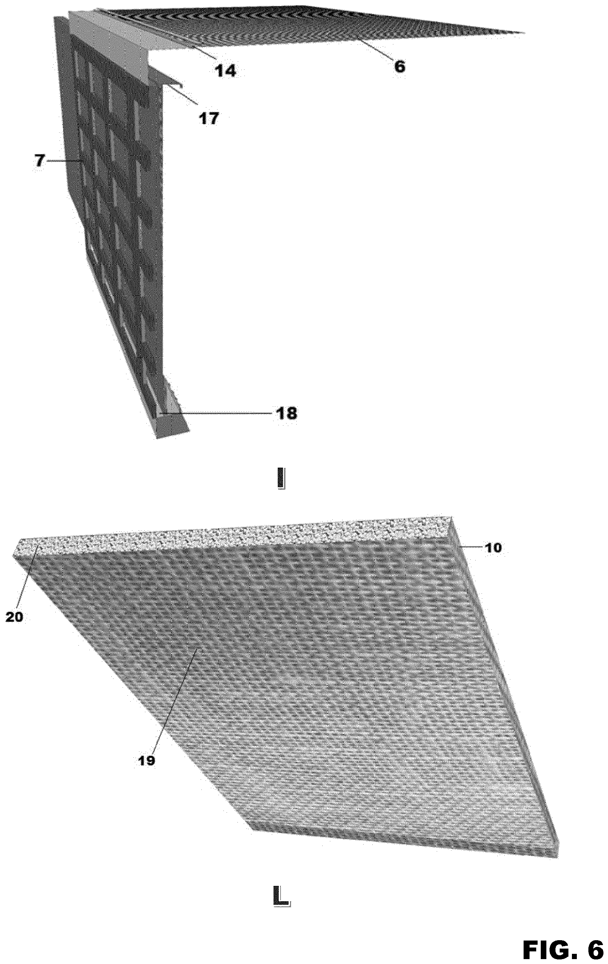

With reference to the letters and numbering shown in the six enclosed Figures, assembly may take place as follows:
**I)** the adsorbent cartridges (Figs. 1, 5-H, 6 L, no. 10) consisting of a compostable fire retardant natural fiber outer shell (Figs. 5-H, 6 L, no. 19) containing natural zeolite (Fig. 6-L, no. 20) shall be inserted into the box (Figs. 5-H, 6-L, no. 17) of the panels. Then the perforated outer wall of the panels (Figs. 1, 2, 4, 5-H, No. 6) is closed again using the hinge (Figs. 4, 5-H, 6-L, No. 14);
**II)** the sliding windowed metal sheets (Figs. 1, 2, 4, 5, no. 2) placed between the fixed wall of the panels (Fig. 6 no. 7) and the adsorbing cartridge (Figs. 1, 5-H, 6-L, no. 10) are inserted into the special groove (Fig. 6-I, no. 18), so that, by superimposing the full spaces of the same windowed metal sheets on the corresponding empty spaces of the fixed wall of the panels, it is possible to regulate the air and vapors flows of the device.
**III)** The side panels are assembled to the rear panel (Figs. 1, 2-B, 5-G, No. 5) Using the tongue-and-groove joints (Figs. 1, 5, No. 13).
**IV)** The bottom panel (Figs. 1, 2, 3, 4, 5-G, No. 12) and the top panel (Figs. 1, 2, 3, 4, No. 4) are assembled to the side panels (Figs. 1, 2, 4-E, 5-H, No. 3) by means of tongue-and-groove joints (Figs. 1, 5, No. 13).
**V)** The front flap door (Figs. 1, 2-A, 3-C, 3-D, No. 23) with toughened glass (Figs. 1, 2-A, 3-C, 3-D, No. 1), handle (Figs. 1, 2-A, 3-C, 4-F, No. 8) and gasket seal (Fig. 3-D, No. 22), shall be mounted to the bottom panel (Figs. 1, 2, 3-C, 4-E, 5-G, No. 12) by means of the appropriate hinges (Figs. 3-D and 5-G, No. 24 and 15) and then the lock nut (Fig. 5-G, No. 16) is screwed on to the threaded hinge.
**VI)** Is placed on the baking tray for the collection of the cooking liquids (Figs. 1, 2, 3-C, 5-G, n. 9) a cartridge similar to the one inserted in the panels, including a permeable external casing (Fig. 6 n. 19) and a granular, microporous, filtering, purifying, heat-resistant internal material (Fig. 6 n. 20) and insert the same baking tray (Figs. 1, 2, 3-C, 5-G, n. 9) in the lower panel (Fig. 5-G n. 12).
**VII)** The grille (Figs. 1, 2-A, No. 11) is inserted in the grooves in the side panels to place foods or foods containers.

Disassembly is performed in reverse order.

The inside walls of the panels have grooves and/or ducts (not shown in the figure) that are used to convey condensation and cooking liquids into the baking tray (9) of the lower panel (12). The adsorbent cartridge placed in the baking tray of the lower panel increases the deodorizing and purifying capacity of the device.

With the exception of the cartridges, which are treated as consumables, the other components of the device shown in the pictures can be washed and reused as normal crockery. Spent cartridges should be disposed of in compostable organic waste and replaced with the same ones. As the casing remains efficient for longer than its contents, may be only replaced the microporous adsorbent material. Operation does not require any special measures or skills.

A flame suitable for the desired type of cooking is required for use on a gas cooker. Heat transmission should be as even as possible.

For use on the barbecue, the device is positioned normally and cooking is controlled through the glass door, which can be opened to turn or season the food. When hot, the device must be moved using oven gloves or suitable handles (not shown in the figure).

Grilling and roasting always produce organic odorous substances. Even a few odor units, harmless from a health and environmental point of view, can be particularly unpleasant (e.g. when roasting fish).

Natural zeolite, in addition to its adsorptive capacity, is known to be effective as a purifier of various liquid and gaseous compounds.

Adsorbent, deodorizing, filtering and purifying capacities are linked to the complex system of channels and cavities that characterizes many microporous materials.

The device can use various adsorbent materials (e.g. activated carbon), but natural zeolites are extremely cost-effective and the clinoptilolite being the most suitable. The effectiveness of zeolite in the field of purification depends on its selectivity towards polar or polarizable molecules. The separation processes are linked to the molecular sieving properties.

Zeolite and/or other microporous materials that may be used in the device

Should have approximately the following properties: total compostable, CEC (cation exchange capacity expressed in mill equivalents of cations exchanged per gram of material) preferably between 1.30 and 1.70; specific surface area preferably between 38 and 60 m2/g.

The materials making up the adsorbent cartridges must preferably have a thermal stability that exceeds 500°C, i.e. these materials must maintain their specific characteristics (permeability, absorbency, filtration, purification, etc.) even beyond 500°C.

The cartridges in the panel box and in the baking tray on the lower panel absorb vapors, fumes and cooking liquids. What is not retained flows into the baking tray (9), purified and deodorized, through special ducts (not shown in the figure) located in the panels.

In the version described above, the device is dismountable and comprises perforated sheet metal panels (3, 12) assembled with special tongue-and-groove joints (13).

These panels are equipped with ducts (not shown in the drawing) which serve to convey liquids and cooking condensate by gravity to the baking tray (9) on the lower panel.

The above-mentioned panels are openable and suitable to contain heat-resistant and compostable adsorbent, filtering, purifying cartridges, comprising a permeable outer casing (19), which can be opened and closed by means of folds arranged to allow replacement of contents, consisting of a microporous granular material (20), preferably natural clinoptilolite zeolite.

The aforementioned panels are provided with perforated sheet metal sliding on special guides (18) which, by overlapping with full spaces with corresponding empty spaces of the fixed wall of the device panels (3,12), act as air and vapors flow control valves.

The device can be equipped with its own heat source powered by gas or electricity, a fan for forced air circulation and a lamp to illuminate its interior. In the proposed version, the cartridges, through the heat flows of the cooking cycle carry out the adsorbing, deodorizing and purifying functions.

Compared to other cooking devices, the invention has the following advantages:
a) Adsorbs, purifies and deodorizes cooking vapors and liquids from within, without the use of more complicated and expensive devices.
b) It avoids or at least considerably limits the spread and effects of cooking vapors and odors in the environment.
c) It allows for healthier and less impactful roasting and grilling, both indoors and outdoors.
d) To adsorb, deodorize and purify cooking vapors and liquids, the device uses natural materials (zeolite clinoptilolite, etc.) that can be disposed of with the separate collection of organic household waste, which improves compost for use in agriculture and green areas in general.

The represented invention therefore achieves the intended purposes.

The modification or replacement of parts of the invention with technically equivalent or superior elements, as well as the diversification of the materials used according to different possible functional requirements, fall within the scope of protection of the invention and related claims.

The object under consideration has been described with particular reference to the letters and numbers of Figures 1, 2, 3, 4, 5, 6 in order to highlight its usefulness and novelty, without any limitation of the claimed protection.

## Claims

1. Dismountable cooking device, **characterized by** the fact that it includes:
perforated sheet metal panels (3, 12) that can be assembled with special interlocking hooks (13), equipped with ducts to convey by gravity liquids and cooking condensation from the cartridges to the collection tray (9) of the lower panel (12) and a compartment (17) with an opening side (6) for the insertion of adsorbent cartridges (10);
compostable adsorbent cartridges (10), shaped according to the compartments (17) of the panels (3, 12) of the device, including a permeable outer casing (19) preferably having flammability class B1 -DIN 41012- or higher and a granular microporous inner material (20), heat refractory having preferably porosity greater than 40%, specific surface area greater than 38 sqm/g, water absorption capacity greater than 40%, cation exchange capacity greater than 1.30 milliequivalents of exchanged cations per gram of material, thermal stability of the materials making up the cartridges that preferably exceeds 500°C, i.e. that they do not lose their specific characteristics (permeability, absorbency, filtration, purification, etc.) even above 500°C.
perforated sheet metal (2) sliding on guides (18), overlapping with solid spaces to corresponding empty spaces on the fixed wall of the device panels (3, 12) and act as a valve for regulating air and vapor flows;
Removable tray (9), placed in the bottom panel of the device (12), on which is placed a compostable adsorbent cartridge similar to that of the panels, comprising a permeable outer casing (19) and a granular, microporous, filtering, heat-resistant inner material (20).
Front flap door (23) with tempered glass through which you access the cooking compartment, equipped with thermal gaskets adhering to the closing interface.

2. Cooking device according to claim 1, **characterized by** the fact that the casing (19) which contains the adsorbent material (20) of the cartridges (10) can be opened and reclosed by means of folds prepared during the manufacturing phase, to allow the replacement of their contents .

3. Cooking device according to each of claims 1 and 2, **characterized by** the fact that it includes its own heat source powered by gas or electricity, a fan for forced air circulation and a lamp for lighting the cooking compartment.

## Amended claims

### Amended claims in accordance with Rule 137(2) EPC.

1. A demountable device for cooking or for uses which similarly require absorption, filtration and purification of fumes, vapors, condensates and liquids, comprising:
- hinged front door (23) with tempered glass, through which access is gained to the cooking space, fitted with thermal seals adhering to the closing interface;
- perforated sheet metal panels (3, 12);
- Removable tray (9) located in the lower panel of the device (12) to collect condensation and cooking liquids;
- Perforated sheet metal panels (3, 12) **characterized by** being equipped with the following elements:
male-female joints (13), allowing easy assembly and disassembly; ducts for conveying liquids and cooking condensate by gravity to the drip tray (9) of the lower panel (12); a compartment (17) with an openable side (6) for inserting adsorbent cartridges (10); perforated plates (2) sliding on special guides (18), which are superimposed with full spaces on corresponding empty spaces of the fixed wall of the device panels (3, 12), acting as a regulating valve of the air and vapor flows; perforated sheet metal (2) sliding on appropriate guides (18), which are superimposed with full spaces on corresponding empty spaces of the fixed wall of the device panels (3, 12),
acting as a regulating valve of the air and vapor flows; removable pan (9) located in the lower panel of the device (12) that collects condensation and
cooking liquids, on which is placed a compostable adsorbent cartridge; Fully compostable adsorbent cartridges (10), made of heat refractory materials,
preferably having flammability class B1 DIN 4102, shaped to fit perfectly in the compartments (17) of the panels (3, 12) and in the removable pan (9) of the device, comprising a permeable outer shell (19) and a granular inner material (20) having preferably a porosity greater than 40%, specific surface area greater than 38 square meters/g, water absorption capacity greater than 40%, cation exchange capacity greater than 1.30 Milli-equivalents of cations exchanged per gram of material, thermal stability greater than 500°C and
other peculiar characteristics that give said cartridges, even at relatively high temperatures (500°C), permeability, capacity for absorption, filtration and purification of fumes, vapors, condensates and liquids.

2. Cooking device according to claim 1, **characterized by** the fact that the casing (19) which contains the adsorbent material (20) of the cartridges (10) can be opened and reclosed by means of folds prepared during the manufacturing phase, to allow the replacement of their contents .

3. Cooking device according to each of claims 1 and 2, **characterized by** the fact that it includes its own heat source powered by gas or electricity, a fan for forced air circulation and a lamp for lighting the cooking compartment.
